# EUROPEAN PATENT APPLICATION

(11) **EP 1 447 419 A1**
(43) Date of publication of application: **18.08.2004**
(21) Application number: 04100509.1
(22) Date of filing: 11.02.2004
(51) Int. Cl.: C08G 18/40, C08G 18/76

(54) **Use of a polyol formulation**

(30) Priority: 11.02.2003 EP 03250848
(71) Applicant: SHELL INTERNATIONALE RESEARCH MAATSCHAPPIJ B.V., 2596 HR Den Haag (NL)
(72) Inventor: Chevalier, Gaelle, 1348, Ottignies, Louvain-la-Neuve (BE); Clerinx, Johannes Eduard Irene Marie Jozefa, 1348, Ottignies, Louva-la-Neuve (BE); Gerard, Eric-Jack, 1348, Ottignies, Louvain-la-Neuve (BE); Van Herzeele, Laurence, 1348, Ottignies, Louvain-la-Neuve (BE); Verstraete, Hilde, 1348, Ottignies, Louvain-la-Neuve (BE)

(57) **Abstract**

Use of a polyol formulation in preparing high resilience foam, which polyol formulation comprises (a) a polymer-modified polyol formed by polymerising an olamine with an organic polyisocyanate in the presence of a polyol, (b) a polymer-modified polyol formed by polymerising one or more ethylenically unsaturated monomers in the presence of a polyol, and optionally further polyol in which the polyol present in polymer-modified polyol (a) and polymer-modified polyol (b) is prepared from hydroxyl containing starting compounds and with the proviso that the polyol is not an amine based polyol; and process of preparing high resilience foam with the help of such polyol formulation.

## Description

The present invention relates to the use of a polyol formulation in preparing high resilience foam, and to a process for preparing high resilience polyurethane foam with the help of such polyol formulation.

### Background of the Invention

High resilience foams are well known in the art. Such foams predominantly exhibit elastic behaviour which means that they change shape when force is applied but return nearly instantaneously to their initial shape when the applied force is removed.

Although a wide range of different high resilience foams are known, further foams are still being developed in order to obtain specific combinations of properties. The aim of the present invention was to develop a foam having high resilience and a lower wet compression set. The wet compression set is a measure for the durability of a foam in humid conditions. Surprisingly, it was found that these properties can be obtained by using a combination of different polymer polyols.

WO 03/016373 (not prepublished) relates to the use of tertiary amine based polyol (b2iii) in a copolymer composition (b2). The presence of the tertiary amine polyol (b2iii) reduces and even eliminates the need to include a conventional tertiary amine and/or tin salt catalyst. Amine based polyols (b2iii) are either initiated with a tertiary amine compound or contain a tertiary amine group in the polyol chain or are partially capped with a tertiary amine group. Preferably, the tertiary amine based polyol is 50 to 100% of the carrier polyol present in (b2).

### Summary of the Invention

Therefore, the present invention relates to the use of a polyol formulation in preparing high resilience foam, which polyol formulation comprises (a) a polymer-modified polyol formed by polymerising an olamine with an organic polyisocyanate in the presence of a polyol, (b) a polymer-modified polyol formed by polymerising one or more ethylenically unsaturated monomers in the presence of a polyol, and (c) optionally further polyol in which the polyol present in polymer-modified polyol (a) and polymer-modified polyol (b) is prepared from hydroxyl containing starting compounds and with the proviso that the polyol is not an amine-based polyol.

It depends on the properties desired for the foam to be prepared and on the polymer polyols used whether further polyol is actually added to the combination of polymer polyols.

The polyol formulation of the present invention is for preparing high resilience foam after having been combined with conventional further additives such as one or more blowing agents, one or more crosslinking agents, one or more polyurethane catalysts and optional further auxiliaries. Therefore, the present invention further relates to a process of preparing high resilience foam by mixing a formulation with isocyanate which formulation comprises, based on total amount of polyol,
(i) 100 parts by weight of the polyol formulation according to the present invention;
(ii) 0.1 to 6 parts by weight of blowing agent;
(iii 0.1 to 5 parts by weight of crosslinking agent(s);
(iv) 0.01 to 2.5 parts by weight of polyurethane catalyst(s); and optionally
(v) further usual auxiliaries.

The final foam is obtained by combining a formulation according to the present invention with isocyanate. Such process for preparing high resilience foam preferably comprises mixing the formulation according to the present invention with isocyanate at an isocyanate index of from 80 to 130, more specifically of from 100 to 120. The isocyanate index is the relative amount of isocyanate used as compared with the theoretical requirement.

The resilience of the foam is measured with the help of the standard ball rebound test (ASTM D 3574-95, Test H). A preferred high resilience foam has the property that the ball bounces back at least 20 %, preferably at least 25 %, more preferably at least 30 %, more preferably at least 35 %, most preferably at least 40 %.

### Detailed description of the Invention

The present invention uses a combination of (a) a polymer-modified polyol formed by polymerising an olamine with an organic polyisocyanate in the presence of a polyol and (b) a polymer-modified polymer formed by polymerising one or more ethylenically unsaturated monomers in the presence of a polyol.

Organic polyisocyanates are organic isocyanates having two or more isocyanate groups. The organic polyisocyanates for polymerisation with olamine can contain one or more different polyisocyanates. The polyisocyanate which can be used includes aliphatic, cycloaliphatic, aromatic and heterocyclic polyisocyanates. Of particular interest are the aromatic polyisocyanates, for example toluene diisocyanate (TDI) and diphenylmethane diisocyanate (MDI) which are commercially available in substantially pure and crude forms. More particularly these include 2,4 and 2,6-toluene diisocyanates and mixtures thereof; diphenylmethane-2,4'-diisocyanates and mixtures thereof (generally referred to as pure MDI), for example, a mixture containing from 70 to 100%, especially 80%, by weight of the 4,4'-isomer and from 0 to 30%, especially 20%, by weight of the 2,4'-isomer; mixtures of MDI with polyphenyl polymethane polyisocyanates made by phosgenating a mixture of polyamines which is obtained by condensing aniline with formaldehyde (generally referred to as crude or polymeric MDI); and mixtures of TDI and MDI, pure or crude, for example, a mixture containing 60% by weight of TDI and 40% by weight of MDI. There may also be used diisocyanates which have been modified in known manner to introduce a significant isocyanurate, carbodiimide, uretonimine, buiret or allophanate content. Other polyisocyanates which may be used include isocyanate-ended prepolymers, for example, reaction products of a diisocyanate with a deficiency of one or more low molecular weight polyols such as trimethylolpropane, dipropylene glycol or tripropylene glycol; and polyisothiocyanates, polyisoselenocyantes and mixtures thereof.

Olamines are defined as organic compounds having one or more hydroxyl groups and one or more amine groups, and may be any of those specified or described in GB-A-2,072,204. Suitable examples of olamines are: monoethanolamine, diethanolamine, triethanolamine, N-methylethanolamine, N-ethylethanolamine, N-butylethanolamine, N-methyldiethanolamine, N-ethyldiethanolamine, N-butyldiethanolamine, monoisopropanolamine, diisopropanolamine, triisopropanolamine, N-methylisopropanolamine, N-ethylisopropanolamine, N-propylisopropanolamine. Substituted alkanolamines may also be used. A preferred alkanolamine is triethanolamine.

The polymerisation of the olamine with the organic polyisocyanate may be catalysed using any of the conventional catalysts for polyurethane chemistry. Such catalysts include tertiary amines such as, for example, triethylenediamine, N-methylmorpholine, diethylethanolamine, and dimethylbenzylamine; tertiary phosphines such as trialkylphosphines, and dialkylbenzylphosphines; strong bases such as alkali and alkaline earth metal hydroxides, alkoxides and phenoxides; salts or organic acids such as sodium acetate, stannous octoate, stannous oleate, lead octoate and zinc octoate; and organometallic derivatives such as disclosed in U.S. Patent Specification No. 2 846 408. Further compounds known to be suitable to someone skilled in art, such as stabilizer, can be present during the polymerization. A very much preferred polymer is the condensation product of triethanolamine and toluene diisocyanate (TDI).

The polymer-modified polyol containing polymer formed by polymerising olamine with an organic polyisocyanate, will usually contain of from 5 to 50%wt of polymer in polyol, more specifically of from 5 to 20 %wt. Commercially available polymer-modified polyol suitable for use as polymer-modified polyol (a) are CARADOL SP50-04 polymer polyol and DESMOPHEN 7652 polymer polyol (CARADOL and DESMOPHEN are trade names).

The polyol which is present in the polymer-modified polyol (a)and the polymer-modified polyol (b) can be any polyol prepared from hydroxyl containing starting compounds known to be suitable to someone skilled in the art with the proviso that the polyol present in each of the polymer polyols is not an amine based polyol. Amine based polyols are polyols which are either initiated with a tertiary amine compound or contain a tertiary amine group in the polyol chain or are partially capped with a tertiary amine group. Amine based polyols are considered not to be present if less that 50 %wt Of the polyol present is amine based polyol, more specifically less than 25 %wt, most specifically less than 2 %wt. The polyol present in (a) and the polyol present in (b) and optional polyol (c) can be the same or can be different. The nominal funtionality of the polyol present in (a) and/or (b) and optional polyol (c) can vary widely. Usually, the polyol has a nominal average functionality of from 1 to 6. The number average molecular weight of the polyol generally will be in the range of from 1000 to 13000, more specifically of from 2000 to 10,000, preferably of from 3000 to 7000. The primary hydroxyl content of the base polyol generally will be of from 0 to 98 %, preferably of from 50 to 95 %, most preferably of from 60 to 95 %. The number average functionality preferably is of from 2.4 to 5, more specifically of from 2.5 to 4.5.

The polyol for use in (a), (b) and/or (c) generally is a polyalkoxylated polyol. Polyoxyalkylated polyols are prepared by reacting a hydroxyl containing compound with an alkylene oxide such as ethylene oxide, propylene oxide, butylene oxide and/or mixtures thereof. Preferably, the alkylene oxide is propylene oxide, optionally together with one or more other alkylene oxides like ethylene oxide or butylene oxide. Preferred hydroxyl containing starting compounds for the polyol present in polymer modified polyol (a) and polymer modified polyol (b) are polyfunctional alcohols, generally containing of from 2 to 8 hydroxyl groups. Examples of such alcohols comprise glycols, glycerol, pentaerythritol, trimethylolpropane, triethanolamine, sorbitol and mannitol. Usually a strong base like potassium hydroxide or a similar metal hydroxide salt is used as a catalyst in this type of reaction. However, catalysts such as double metal cyanide complex catalysts can also be used.

The polyol for use in the present invention can have been capped with poly(oxyethylene) moieties. This can be attained by adding ethylene oxide only at the end of the alkylene oxide, normally propylene oxide, polymerization reaction. This is also sometimes referred to as "tipping" with ethylene oxide. Tipping gives an increased primary hydroxyl content such as a primary hydroxyl content of at least 50 %.

The polymer-modified polyol (b) is formed by polymerising one or more ethylenically unsaturated monomers in the presence of polyol. The ethylenically unsaturated monomer for preparing the polymer is preferably chosen from the group consisting of vinyl aromatic hydrocarbons, like styrene and methyl styrene, acrylonitrile, methacrylonitrile, vinyl chloride, various alkyl acrylates and methacrylates, such as methyl methacrylate and t-butyl methacrylate, and conjugated dienes, like 1,3-butadiene and isoprene. Styrene, acrylonitrile and to a lesser extent (meth)acrylates are the most frequently used monomers, whereby polystyrene, poly (acrylonitrile), copolymers of styrene and acrylonitrile and terpolymers of styrene, acrylonitrile and methyl methacrylate are the polymers usually formed. Preferably, the polymer-modified polyol (b) for use in the present invention comprises polymer formed by polymerising styrene optionally in combination with acrylonitrile. The polymerization generally involves in-situ polymerizing one or more monomers via free radical polymerization. Such in-situ polymerization requires the presence of a free radical polymerization catalyst. If necessary, a dispersion stabilising agent may also be present. Examples of polymer polyols containing this type of polymers are described in EP-A-0,076,491; EP-A-0,162,588; EP-A-0,343,907; US-4,418,840 and EP-A-0,495,551.

The dispersed polymer is generally present in polymer-modified polyol (b) in an amount of from 5 to 60% by weight based on total weight of polymer polyol, more specifically of from 5 to 50 %wt. Examples of some commercially available polymer polyols which may be applied as polymer-modified polyol (b) include the polystyrene polyols CARADOL MD25-02 and CARADOL MD30-02 and the styrene-acrylonitrile polymer polyols CARADOL MD22-40, CARADOL MD22-02 and CARADOL SP33-03 (CARADOL is a trade names).

The total amount of solid polymer particles present in the final polyol formulation preferably is of from 1 to 25 %wt of solid polymer particles, more preferably of from 5 to 20 %wt. In such polyol formulation, it is preferred that the formulation comprises of from 1 to 15 %wt of polymer formed by polymerising an olamine with an organic polyisocyanate and of from 1 to 15 %wt of polymer formed by polymerising one or more ethylenically unsaturated monomers. Preferably, the polyol formulation according to the present invention comprises the polymer-modified polyol (a) and the polymer-modified polyol (b) in such amount that the weight ratio of amount of polymer formed by polymerising an olamine with an organic polyisocyanate to amount of polymer formed by polymerising one or more ethylenically unsaturated monomers, is in the range of from 1 : 100 to 100 : 1, preferably of from 1 : 20 to 20 : 1, more preferably of from 1 : 10 to 10 : 1.

The present invention also relates to a process of preparing a high resilience foam by mixing a formulation with an isocyanate, which comprises, based on total amount of polyol,
(a) 100 parts by weight of the polyol formulation according to the present invention;
(b) 0.1 to 6 parts by weight of blowing agent;
(c) 0 to 5 parts by weight of crosslinking agent(s);
(d) 0.01 to 2.5 parts by weight of polyurethane catalyst(s); and optionally
(e) further usual auxiliaries.

It has been found possible to reliably prepare high resilience foam having a relatively low compression set, more specifically a relatively low wet compression set, with the help of the above formulations.

The use of water as a (chemical) blowing agent is well known. Water reacts with isocyanate groups according to the well known NCO/H2O reaction, thereby releasing carbon dioxide which causes the blowing to occur. Other blowing agents, such as carbon dioxide and/or methylene chloride, can be used as well either per se or in combination with water. Preferably, water is the blowing agent in the formulation according to the present invention.

The use of cross-linking agents in the production of polyurethane foams is well known. Polyfunctional alkanol amines are known to be useful for this purpose. Preferred amines which may be included in the polyol formulation to aid or maintain the miscibility of the first and second polyols include diethanolamine, often abbreviated as DEOA, triethanolamine, often abbreviated as TEOA, and glycerol. Most preferably, diethanolamine is used in the polyol formulation of the present invention. Preferably, the crosslinking agent is present in an amount of from 0.1 to 5 parts by weight.

Polyurethane catalysts are known in the art and include many different compounds. An extensive list of polyurethane catalysts is, for instance, given in US-5,011,908. A preferred catalyst is an amine, especially a tertiary amine, catalyst. Preferred amine catalysts include an amine group substituted by at least two optionally-substituted, preferably unsubstituted, lower alkyl groups which may be the same or different, but are preferably the same. A lower alkyl group may have up to 8, preferably up to 6, more preferably up to 4, carbon atoms, with methyl and ethyl groups being especially preferred. A tertiary amine catalyst may be selected from bis(2,2'-dimethylamino)ethyl ether, trimethylamine, triethylamine, triethylenediamine, dimethylethanolamine, N,N',N'-dimethylaminopropylhexahydrotriazine and N,N-dimethylcyclohexylamine. Examples of commercially available tertiary amine catalysts are those sold under the trade names NIAX, TEGOAMIN, JEFFCAT and DABCO (all trade names). Within the polyurethane catalysts and even within the tertiary amine catalysts a distinction can be made between gellation catalysts and blowing catalysts. Gellation catalysts are catalysts which predominantly promote the gellation of the foaming mixture, i.e. which promote the reaction between polyols and polyisocyanate. Typical gellation catalysts are stannous octoate and dibutyltindilaurate. Blowing catalysts predominantly promote the NCO/H₂O reaction, whereby carbon dioxide is released which causes the blowing to occur. Typical blowing catalysts are dimethylaminoethylether and urea.

Other usual auxiliaries may include fillers, flame retardants, foam stabilisers (surfactants) and colourants. The flame retardants can be liquid and/or solid flame retardants. Organosilicone surfactants are most conventionally applied as foam stabilisers in polyurethane production. A large variety of such organosilicone surfactants is commercially available. A preferred compound is compound L2100 commercially available from Osi. Usually, such foam stabiliser is used in an amount of up to 5% by weight based on the reaction mixture of polyol reactant and polyisocyanate reactant. The amount in which the usual auxiliaries can be present, can vary widely. Generally, the amount will be of from 0 to 50 parts by weight, based on amount of polyol, more specifically of from 0 to 40 parts by weight.

In a further aspect the present invention relates to the preparation of a high resilience polyurethane foam by mixing a formulation according to the present invention with a isocyanate at an isocyanate index of from 80 to 130. The process is preferably carried out by intimately mixing all components but the isocyanate, preferrably polyisocyanate, then adding the isocyanate and mixing this with the polyol formulation. The foams are subsequently allowed to form. The foam can be manufactured either batch-wise, or continuously such as with the help of a conveyor. Mixing of the various components is preferably carried out at ambient temperature, suitably in the range of from 10 to 40 °C, preferably of from 20 to 25 °C.

Polyisocyanates that may be used are those conventionally applied in the production of polyurethane foams. Useful polyisocyanates should contain at least two isocyanate groups and include both aliphatic (usually alkylene) and aromatic di-, tri-, tetra- and higher isocyanates known in the art to be suitably applied in the production of flexible polyurethane foams. Mixtures of two or more of such aliphatic and/or aromatic polyisocyanates may also be applied. Examples of suitable polyisocyanates, include 2,4-toluene diisocyanate (2,4-TDI), 2,6-TDI, mixtures of 2,4-TDI and 2,6-TDI, 1,5-naphthene diisocyanate, 2,4-methoxyphenyl diisocyanate, 4,4'-di-phenylmethane diisocyanate (MDI), 4,4'-biphenylene diisocyanate, 3,3'-dimethoxy-4, 4'-biphenylene diisocyanate, 3,3'-dimethyl-4, 4'-biphenylene diisocyanate and 3,3'-dimethyl-4, 4'-diphenylmethane diisocyanate, 4,4',4"-triphenylmethane triisocyanate, 2,4,6-toluene triisocyanate, 4,4'-dimethyl-2,2',5,5'-diphenylmethane tetraisocyanate, polymethylene-polyphenylene polyisocyanate, carbodiimide modified isocyanates, MDI prepolymers and mixtures of two or more of these. Polymeric MDI, a mixture of polyisocyanates with MDI as the main component, may also be used. For the purpose of the present invention the use of TDI is preferred. Polyisocyanates are commercially available.

An advantage of the present invention is that a wide range of polyisocyanate indices can be used. The polyisocyanate can be used in such amount that the isocyanate index is in the range of from 80 to 130. Especially good results are obtained with polyisocyanate indices in the range of from 85 to 120.

The density of the foam prepared with the help of the present invention is relatively low. Generally, the foam obtained will have a density of at most 80 kg/m³, preferably at most 60 kg/m³. The density preferably is at least 15 kg/m³, more specifically at least 20 kg/m³.

Other conventional ingredients used for making polyurethane foams may be incorporated into the formulation for preparing high resilience foam in accordance with the invention, such as surfactants, crosslinking or chain lengthening agents, additives to regulate cell size and structure, e.g. silicone oil or polysiloxane-polyalkylene oxide block copolymers, blowing agents, fillers, pigments, plasticisers and flame retardants, e.g. halogenated alkylphosphates and melamine. In relation to flame retardants it is possible that an olphosphine may be used in place of or in conjunction with an olamine in the preparation of the stabiliser and/or of the polymer-modified polyol, to confer flame retardation properties. Suitable olphosphines are discussed in detail in WO 92/02567.

The present invention is further illustrated in the

### Examples.

### Examples

Polymer polyols, polyol and additives were mixed in different ratios.

### PIPA polymer polyol

CARADOL SP50-04 polymer polyol contains 10 %wt of the condensation product of triethanolamine and toluene diisocyanate (TDI) in a liquid glycerol-initiated polyol having a nominal functionality of 3 and a nominal average molecular weight of 4700 g/mole.

### SAN polymer polyol

CARADOL MD22-40 polymer polyol contains 40 %wt of a copolymer of styrene and acrylonitrile (molar ratio of styrene to acrylonitrile of about 0.7 to 0.8) in a liquid glycerol-initiated polyol having a nominal functionality of 3 and a nominal molecular weight of 4700 g/mole.

### Polyol

CARADOL MD36-13 is a liquid glycerol-initiated polyol having a nominal average functionality of 3 and a nominal molecular weight of 4700 g/mole.

With the exception of the isocyanate, the compounds described in Tables 1, 2 and 3 were blended into one stream. The isocyanate formed another stream. The amounts indicated as "php" are based on 100 parts by weight of polyols. Both streams were mixed and allowed to react.

The surfactant is L2100 silicone surfactant available from Osi.

CARADATE T80 is a mixture of 80 % 2,4-toluene diisocyanate and 20 % 2,6- toluene diisocyanate.

The resilience was measured according to ASTM D 3574-95 Test H.

The compression sets were measured according ASTM D 3574-95 at 75% indentation. The dry compression set measurements were carried out at 70 °C for 22 hours, whereas the wet compression set measurements were performed in a humidity cabinet at 40 °C and 95% relative humidity for 22 hours.

The results of the foam evaluation are indicated in Tables 1 and 2.

The relatively high resilience and low wet compression set for foams according to the present invention, are clear from comparing the results obtained in the Comparative Examples with the results in the Examples which are according to the present invention. A lower compression set indicates a more durable foam.

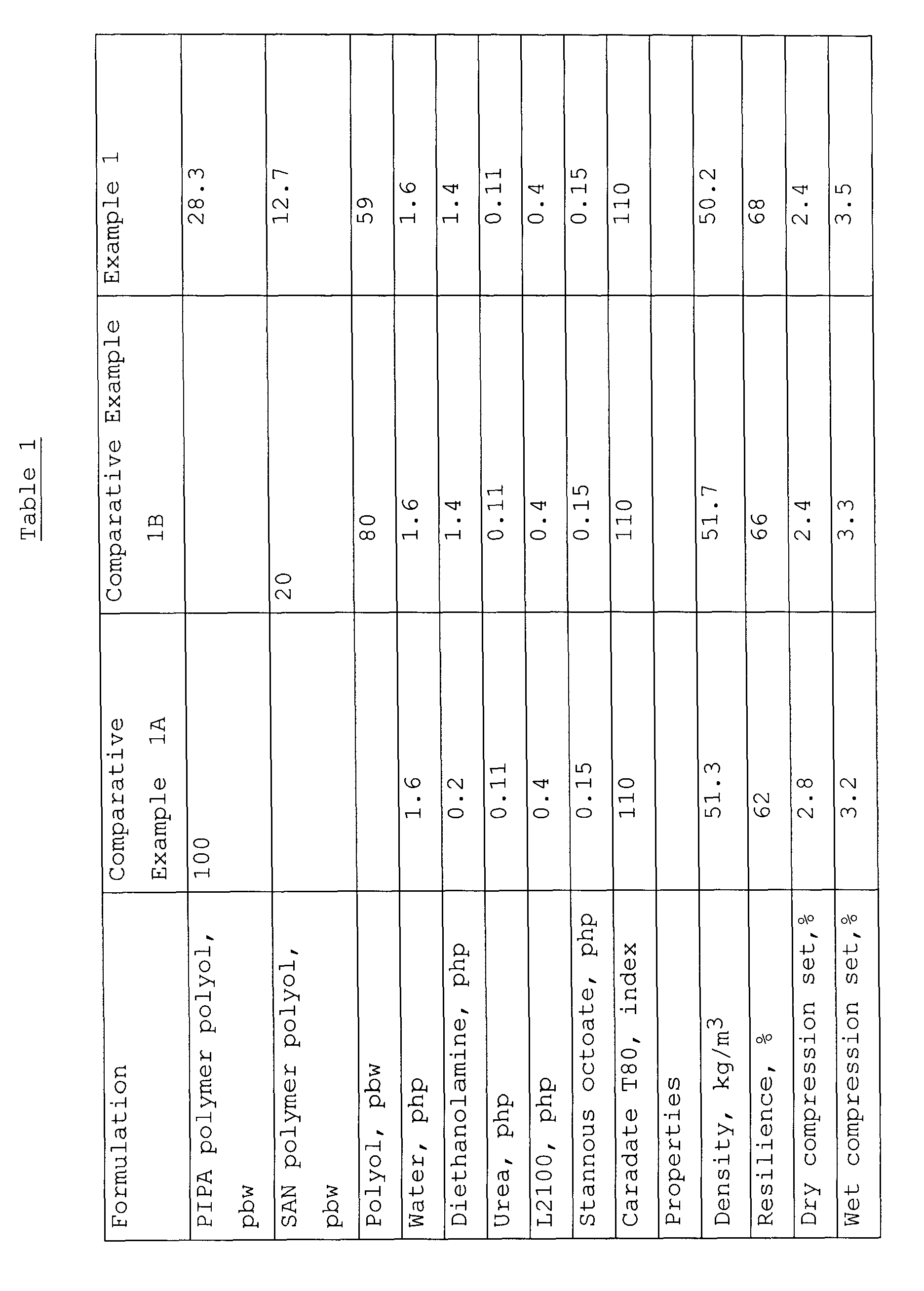

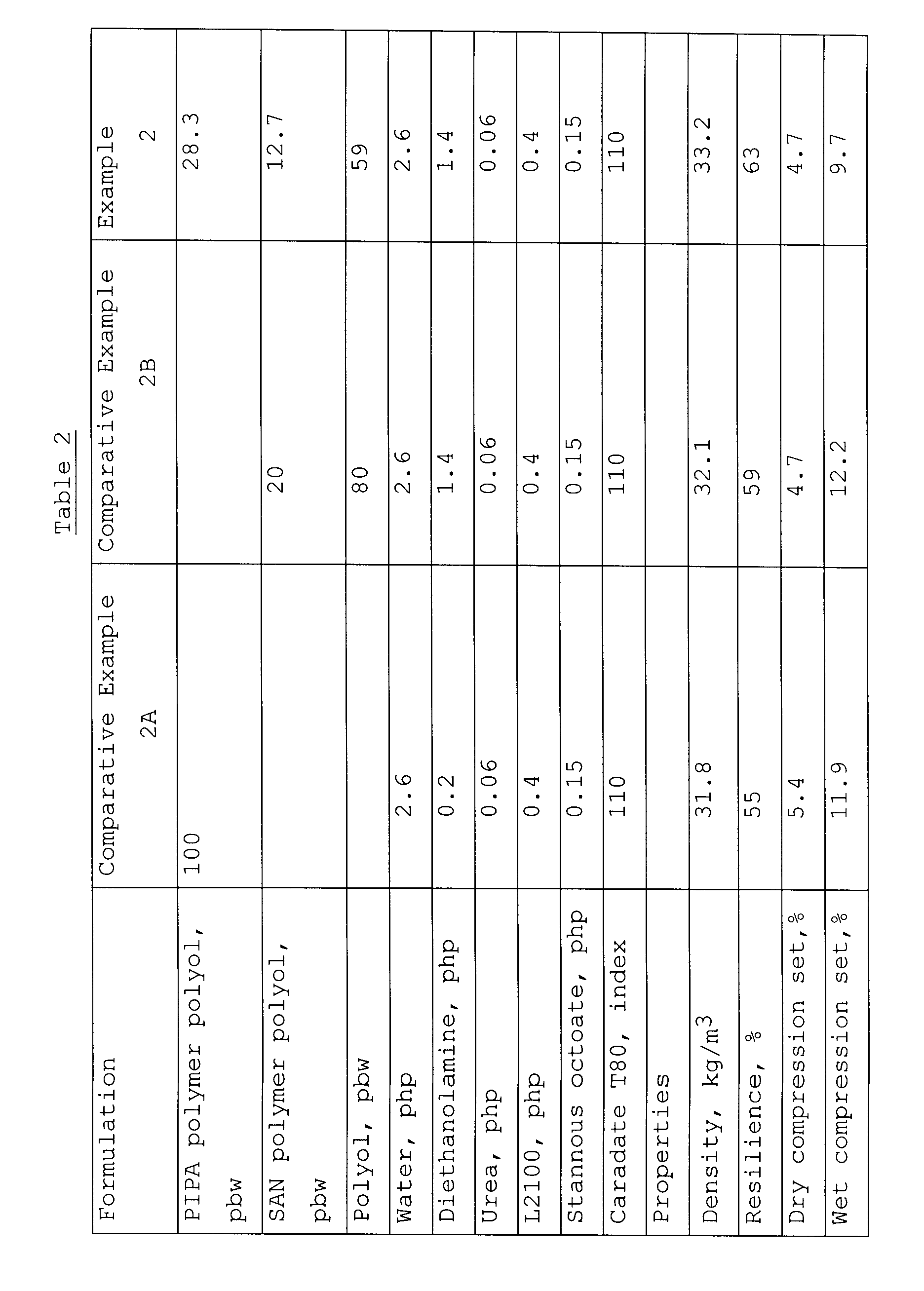

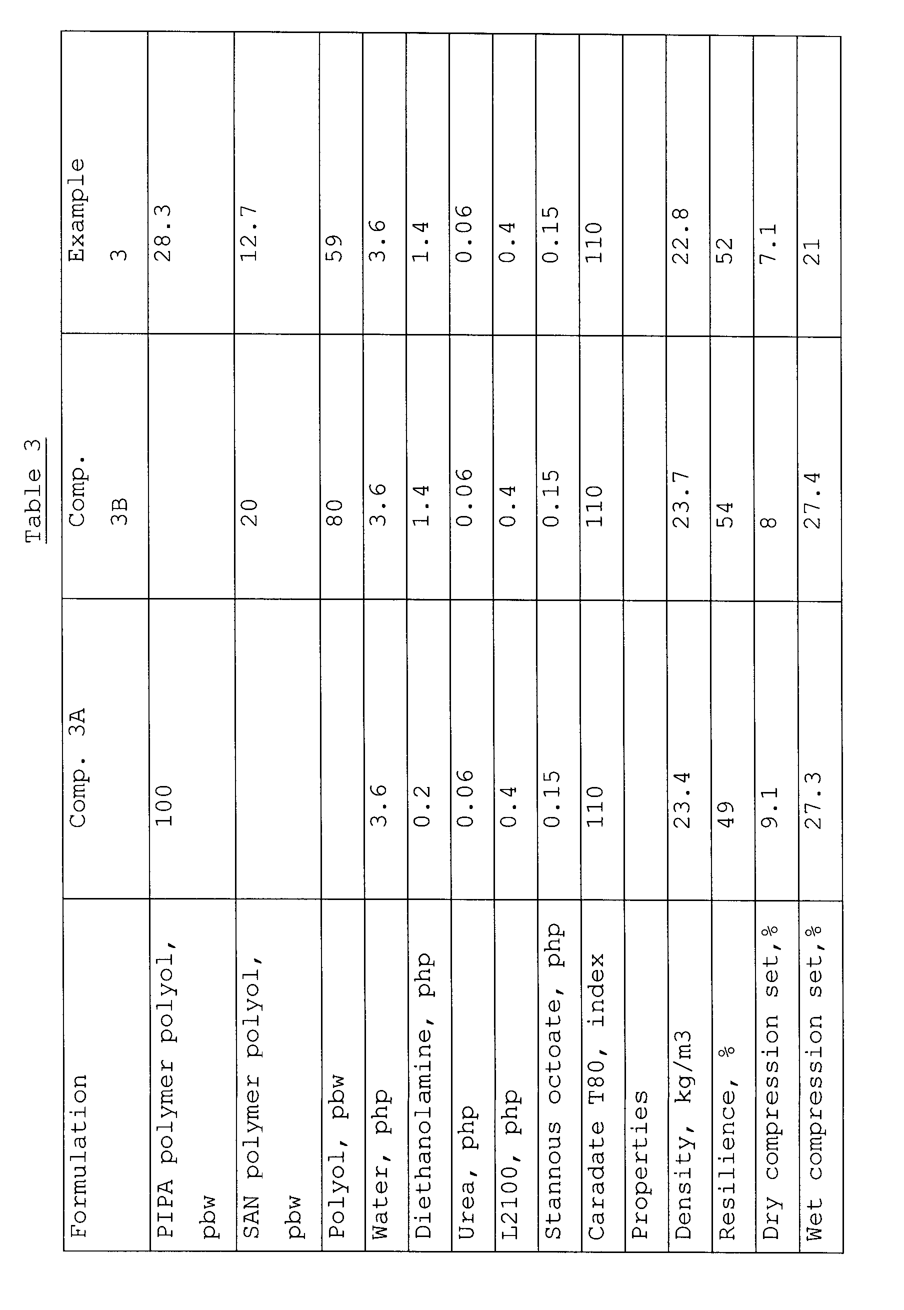

## Claims

1. Use of a polyol formulation in preparing high resilience foam, which polyol formulation comprises
(a) a polymer-modified polyol formed by polymerising an olamine with an organic polyisocyanate in the presence of a polyol,
(b) a polymer-modified polyol formed by polymerising one or more ethylenically unsaturated monomers in the presence of a polyol, and
(c) optionally further polyol,
in which the polyol present in polymer-modified polyol (a) and polymer modified polyol (b) is prepared from hydroxyl containing starting compounds and with the proviso that the polyol is not an amine based polyol.

2. Use of a polyol formulation according to claim 1, in which polyol formulation the weight ratio of amount of polymer formed by polymerising an olamine with an organic polyisocyanate to amount of polymer formed by polymerising one or more ethylenically unsaturated monomers, is in the range of from 1 : 10 to 10 : 1.

3. Use of a polyol formulation according to claim 1 and/or 2, which formulation comprises of from 1 to 15 %wt of polymer formed by polymerising an olamine with an organic polyisocyanate and of from 1 to 15 %wt of polymer formed by polymerising one or more ethylenically unsaturated monomers.

4. Use of a polyol formulation according to claim 3, which formulation comprises in total of from 1 to 25 %wt of solid polymer particles.

5. Use of a polyol formulation according to any one of claims 1 to 4, in which the polymer present in polymer-modified polyol (b) is formed by polymerising styrene optionally in combination with acrylonitrile.

6. Process of preparing a high resilience polyurethane foam by mixing a polyol formulation with an isocyanate, which polyol formulation comprises based on total amount of polyol,
(i) 100 parts by weight of the polyol formulation according to any one of claims 1 to 5,
(ii) 0.1 to 6 parts by weight of blowing agent;
(iii) 0 to 5 parts by weight of crosslinking agent(s);
(iv) 0.01 to 2.5 parts by weight of polyurethane catalyst(s); and optionally
(v) further usual auxiliaries.

7. Process according to claim 6 in which process the polyol formulation is mixed with the isocyanate at an isocyanate index of from 80 to 130.
